# EUROPEAN PATENT APPLICATION

(11) **EP 4 495 631 A1**
(43) Date of publication of application: **22.01.2025**
(21) Application number: 22932163.3
(22) Date of filing: 18.03.2022
(51) Int. Cl.: G01S 17/86

(54) **SENSOR SYSTEM AND SENSING METHOD**

(71) Applicant: Sony Interactive Entertainment Inc., Tokyo 108-0075 (JP)
(72) Inventor: SHIMAZU Takashi, Tokyo 108-0075 (JP)
(74) Representative: Müller Hoffmann & Partner
(86) International application number: PCT/JP2022/012579
(87) International publication number: WO 2023/175890

(57) **Abstract**

According to an aspect of the present invention, there is provided a sensor system including a first sensor that irradiates an object with irradiation light and a second sensor that is an event-based vision sensor capable of capturing an image of the object, in which the first sensor includes a first control section that transmits to the second sensor a signal indicative of timing at which irradiation with the irradiation light is to be performed. According to another aspect of the present invention, there is provided a sensing method including a step of, by a first sensor, irradiating an object with irradiation light and a step of, by the first sensor, transmitting a signal indicative of timing at which irradiation with the irradiation light is to be performed, to a second sensor that is an event-based vision sensor capable of capturing an image of the object.

## Description

### [Technical Field]

The present invention relates to a sensor system and a sensing method.

### [Background Art]

Time-of-flight (ToF) sensors for measuring the distance to an object on the basis of the time of flight of light are used, for example, to acquire three-dimensional information of a subject, and are roughly classified into those based on the direct ToF (dToF) technique that measures a time difference between irradiation with irradiation light and reception of reflected light and those based on the indirect ToF (iToF) technique that measures the distance by accumulating reflected light and detecting a phase difference from the emitted light. A technology relating to ToF sensors is described in PTL 1, for example.

### [Citation List]

### [Patent Literature]

[PTL 1]
Japanese Patent Laid-open No. 2019-078748

### [Summary]

### [Technical Problem]

Such a ToF sensor as that described above performs irradiation with pulse-like irradiation light, and the duration time of irradiation is thus short. Therefore, for example, even when a vision sensor captures an image of an object while the same object is being irradiated with irradiation light by the ToF sensor and a wavelength band of the irradiation light is included in a detection wavelength band of the vision sensor, if the vision sensor is a frame-based one having time resolution and spatial resolution which are not particularly high, the irradiation light of the ToF sensor has substantially no influence on an output of the vision sensor.

However, in the case of event-based vision sensors which have been developed in recent years, the time resolution is high. Hence, if the wavelength band of the irradiation light is included in the detection wavelength band of the vision sensor, the irradiation light may have an influence on the output of the vision sensor when the vision sensor captures an image of an object while the same object is being irradiated with irradiation light by the ToF sensor.

Accordingly, it is an object of the present invention to provide a sensor system including a device that irradiates an object with irradiation light and an event-based vision sensor that captures an image of the object as well as a sensing method therefor, the sensor system and the sensing method being able to prevent the irradiation light from influencing a detection result of the vision sensor.

### [Solution to Problem]

According to an aspect of the present invention, there is provided a sensor system including a first sensor that irradiates an object with irradiation light and a second sensor that is an event-based vision sensor capable of capturing an image of the object, in which the first sensor includes a first control section that transmits to the second sensor a signal indicative of timing at which irradiation with the irradiation light is to be performed.

According to another aspect of the present invention, there is provided a sensing method including a step of, by a first sensor, irradiating an object with irradiation light and a step of, by the first sensor, transmitting a signal indicative of timing at which irradiation with the irradiation light is to be performed, to a second sensor that is an event-based vision sensor capable of capturing an image of the object.

### [Brief Description of Drawings]

[FIG. 1]

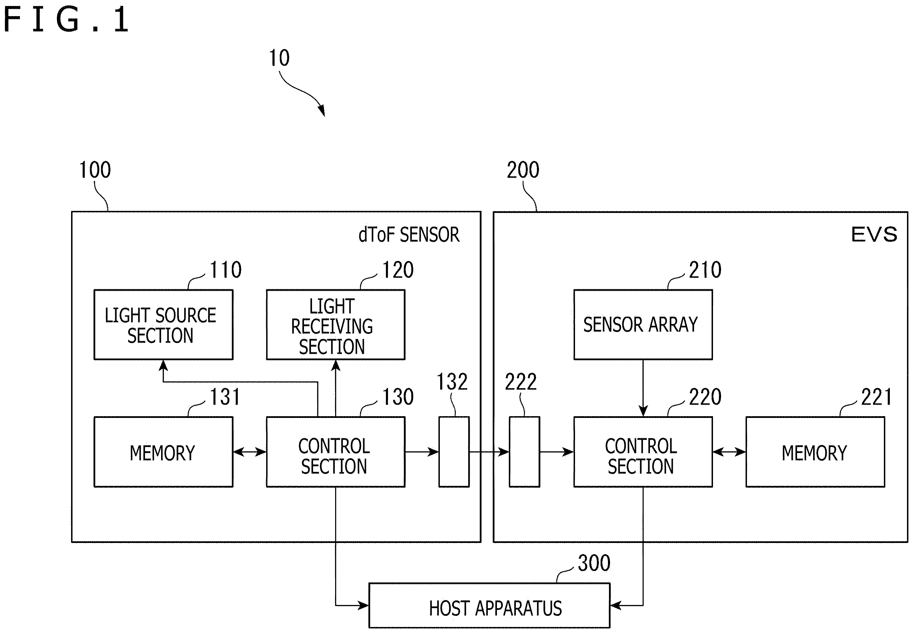

   FIG. 1 is a diagram illustrating a schematic configuration of a sensor system according to one embodiment of the present invention.
[FIG. 2]

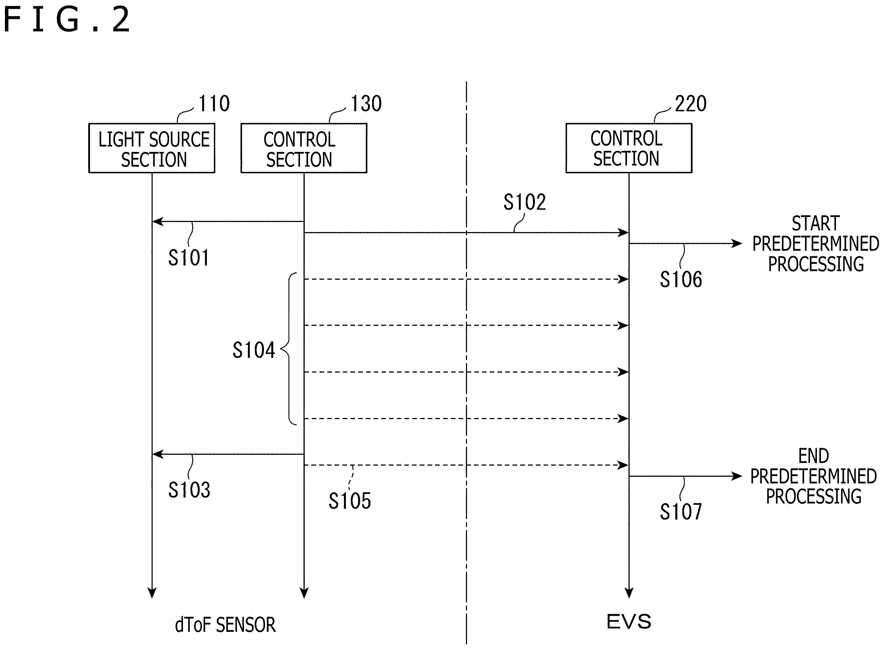

   FIG. 2 is a timing chart illustrating an example of processing performed in the sensor system illustrated in FIG. 1.

### [Description of Embodiments]

Some embodiments of the present invention will be described in detail below with reference to the accompanying drawings. It is to be noted that, in the present specification and the drawings, constituent elements having substantially the same functional configuration are denoted by the same reference sign and that duplicate descriptions are omitted.

FIG. 1 is a diagram illustrating a schematic configuration of a sensor system according to one embodiment of the present invention. In the example illustrated, a sensor system 10 includes a dToF sensor 100 and an event-based vision sensor (EVS) 200. The dToF sensor 100 can irradiate an object with irradiation light to perform measurement, and the EVS 200 can capture an image of the same object. The dToF sensor 100 and the EVS 200 are connected to each other and can transmit and receive signals as will be described later.

The dToF sensor 100 includes, for example, a light source section 110 that has a vertical cavity surface emitting laser (VCSEL) element for emitting laser light as the irradiation light, a mirror, and the like, a light receiving section 120 that has a light receiving element for receiving the laser light as reflected light reflected by an object in a space, and a control section 130 that controls the light source section 110 and the light receiving section 120. The dToF sensor 100 measures a time difference between the irradiation with the irradiation light and the reception of the reflected light, thereby measuring the distance to the object. Data regarding the measured time difference or distance is, for example, output to a host apparatus 300.

Meanwhile, the EVS 200 includes a sensor array 210 constituted by sensors including light receiving elements and a control section 220 that controls the sensor array 210. When the sensors detect a change in intensity of incident light, more specifically, a change in luminance on a surface of the object, the EVS 200 generates an event signal including a timestamp, identification information regarding the sensors, and polarity information regarding the luminance change. The generated event signal is, for example, output to the host apparatus 300.

The host apparatus 300 is, for example, a game machine, a personal computer (PC), or a network-connected server apparatus. It is to be noted that the host apparatus 300 to which the output from the dToF sensor 100 is transmitted is not necessarily the same as the host apparatus 300 to which the output from the EVS 200 is transmitted. Further, in the present embodiment, the host apparatus 300 is not included in the sensor system 10, and the dToF sensor 100 and the EVS 200 are connected to each other without the intervention of the host apparatus 300.

In the sensor system 10 as described above, the control sections 130 and 220 of the respective devices include, for example, a processing circuit such as a digital signal processor (DSP), an application specific integrated circuit (ASIC), and/or a field-programmable gate array (FPGA). To the control sections 130 and 220, for example, memories 131 and 221 including a read only memory (ROM) and/or a random access memory (RAM) of various kinds are connected, respectively. The control sections 130 and 220 perform operations to be described later, by operating in accordance with program codes stored in the memories 131 and 221. Further, to the control sections 130 and 220, communication interfaces 132 and 222 for transmitting and receiving signals between the dToF sensor 100 and the EVS 200 are connected, respectively. The communication interfaces 132 and 222 are, for example, bus interfaces. In the case where the dToF sensor 100 and the EVS 200 are implemented as separate devices, the communication interfaces 132 and 222 are mounted in the respective devices. In the case where the dToF sensor 100 and the EVS 200 are implemented in the same device, the communication interfaces 132 and 222 may be provided as a common interface.

In the present embodiment, the control section 130 of the dToF sensor 100 transmits to the EVS 200 a signal indicative of timing at which irradiation with the irradiation light is to be performed. Specifically, for example, the control section 130 performs processing of transmitting the signal to the EVS 200 concurrently with the control of causing the light source section 110 to perform irradiation with the irradiation light. In this case, when the light source section 110 stops irradiation with the irradiation light, the transmission of the signal to the EVS 200 also stops. Alternatively, in anticipation of a delay caused by transmission and processing of the signal, the control section 130 may start the transmission of the signal earlier by a predetermined period of time than the start of the irradiation with the irradiation light by the light source section 110, and may end the transmission of the signal earlier by a predetermined period of time than the end of the irradiation. The signal may be transmitted, for example, consecutively from the start to the end of the irradiation. Alternatively, at the time of the start and the end of the irradiation, such a signal that the EVS 200 can recognize whether the signal is indicative of the start or the end may be transmitted. Further alternatively, in the case where a period of time during which the light source section 110 continues irradiation is fixed, a signal may be transmitted only at the start of the irradiation. The signal transmitted by the control section 130 is transmitted from the dToF sensor 100 to the EVS 200 via the communication interfaces 132 and 222. Since, in general, the irradiation with the irradiation light is periodically repeated according to a predetermined operation pattern in the dToF sensor 100, the transmission of the signal to the EVS 200 is also repeated periodically.

Meanwhile, in the present embodiment, the control section 220 of the EVS 200 receives the signal from the dToF sensor 100 via the communication interface 222. On the basis of the signal thus received, the control section 220 performs, for example, processing for preventing the irradiation light from influencing a detection result of the EVS 200. Specifically, for example, the control section 220 performs processing of invalidating the event signal generated during the irradiation with the irradiation light. As described above, the EVS 200 generates an event signal when the sensors in the sensor array 210 detect a change in luminance of incident light. By, for example, not transferring the event signal to the host apparatus 300 while the reception of the signal from the dToF sensor 100 is continued, the control section 220 invalidates the event signal. After the irradiation has ended, the control section 220 resumes transferring the event signal to the host apparatus 300 to validate the event signal. The control section 220 validates the event signal again when the reception of the signal from the dToF sensor 100 has stopped or when the signal indicative of the end of the irradiation has been received. In the case where the period of time during which the light source section 110 of the dToF sensor 100 continues irradiation is fixed and where the signal is transmitted only at the start of the irradiation, the control section 220 validates the event signal again at the time when a predetermined irradiation duration time has elapsed from the start of the processing.

Alternatively, in anticipation of a delay caused by transmission and processing of the signal, the control section 220 may invalidate the event signal retroactively, from a point in time a predetermined period of time earlier than the start of the irradiation indicated by the signal from the dToF sensor 100. The event signal can retroactively be invalidated provided that the predetermined period of time is shorter than a period of time during which the event signal to be transferred is temporarily buffered in the memory 221. In this case, the control section 220 may validate the event signal again retroactively, from a point in time the predetermined period of time earlier than the end of the irradiation indicated by the signal from the dToF sensor 100.

By the control section 220 thus invalidating the event signal generated during the irradiation with the irradiation light, the event signal transferred from the control section 220 to the host apparatus 300 no longer includes the detection result that is obtained during the irradiation with the irradiation light by the dToF sensor 100. Therefore, as a result, it is possible to prevent the irradiation light from influencing the detection result of the EVS 200.

As another example, the control section 220 may set a predetermined flag for the event signal generated during the irradiation with the irradiation light. The predetermined flag is added to the event signal, for example, as optional setting information. In this case, the control section 220 sets the predetermined flag for the event signal input from the sensor array 210, before transferring the event signal to the host apparatus 300, while the reception of the signal from the dToF sensor 100 is continued, or during a period from the reception, from the dToF sensor 100, of the signal indicative of the start of the irradiation to the reception, from the dToF sensor 100, of the signal indicative of the end of the irradiation. In the case where the signal is transmitted only at the start of the irradiation, the control section 220 keeps setting the predetermined flag for the event signal until the predetermined irradiation duration time has elapsed from the start of the processing. As with the example of invalidation described above, in anticipation of a delay caused by transmission and processing of the signal, the control section 220 may keep setting the flag for the event signal during a retroactive period whose start and end are earlier by a predetermined period of time than the start and end of the irradiation. The event signal can retroactively be flagged or the flag set for the event signal can retroactively be cancelled provided that the predetermined period of time is shorter than the period of time during which the event signal to be transferred is temporarily buffered in the memory 221.

By the control section 220 thus setting the predetermined flag for the event signal generated during the irradiation with the irradiation light, the host apparatus 300 having received the event signal transferred from the control section 220 can distinguish the event signal that is generated during the irradiation with the irradiation light by the dToF sensor 100, from other event signals. The host apparatus 300 may, for example, ignore the event signal that is generated during the irradiation with the irradiation light, or treat the event signal as one having relatively low reliability. Accordingly, it is possible to prevent the irradiation light from influencing the detection result of the EVS 200.

It is to be noted that, in each of the examples described above, the period of time corresponding to the delay caused by transmission and processing of the signal is adjusted to a suitable length taking delays in both the dToF sensor 100 and the EVS 200 into account. Hence, for example, in the case where the control section 130 of the dToF sensor 100 starts and ends the transmission of the signal earlier by a predetermined period of time than the start and end of the irradiation, the control section 220 of the EVS 200 invalidates the event signal or sets the predetermined flag for the event signal, not retroactively, on the basis of the timing of the start and end of the reception of the signal. Alternatively, in the case where the control section 130 of the dToF sensor 100 starts and ends the transmission of the signal at substantially the same time with the start and end of the irradiation, the control section 220 of the EVS 200 keeps invalidating the event signal or keeps setting the predetermined flag for the event signal during a retroactive period whose start and end are earlier by a predetermined period of time than the start and end of the reception of the signal. The predetermined period of time referred to in these cases to bring the start and end of the transmission of the signal forward or to perform processing during a retroactive period whose start and end are earlier than the start and end of the reception of the signal may be set, for example, by a procedure of calibration through the host apparatus 300. It is to be noted that, in the case where the delay caused by transmission and processing of the signal is ignorable, the dToF sensor 100 and the EVS 200 may each perform processing on the basis of the signal without bringing each timing forward.

FIG. 2 is a timing chart illustrating an example of the processing performed in the sensor system illustrated in FIG. 1. In the example illustrated, the control section 130 of the dToF sensor 100 first performs control of causing the light source section 110 to start irradiation with the irradiation light (step S101). This control may be performed regularly according to a predetermined operation pattern or may be started in response to a command from the host apparatus 300, for example. At this time, the control section 130 transmits the signal to the EVS 200 (step S102). As described above, the signal may be transmitted at substantially the same time with the control for the light source section 110 as in the example illustrated, or may be transmitted a predetermined period of time earlier than the timing of the control for the light source section 110. Thereafter, the control section 130 may consecutively transmit the signal (step S104) until it performs control of causing the light source section 110 to stop the irradiation with the irradiation light (step S103), or may transmit the signal again only at the end of the irradiation (step S105). In the latter case, in order to make the start and the end of the irradiation distinguishable from each other, the signal transmitted at step S105 is made different from the signal transmitted at step S102. Alternatively, in the case where the irradiation duration time is fixed, only the transmission of the signal at step S102 may be performed.

Meanwhile, upon receipt of the signal transmitted at step S102 described above, the control section 220 of the EVS 200 starts predetermined processing for preventing the irradiation light emitted by the dToF sensor 100 from influencing the detection result of the EVS 200 (step S106). As described above, the predetermined processing is, for example, processing of invalidating the event signal generated by the sensor array 210, so as not to transfer the event signal to the host apparatus 300, or processing of setting the predetermined flag for the event signal generated by the sensor array 210, before transferring the event signal to the host apparatus 300. Such processing may be started at substantially the same time with the reception of the signal as in the example illustrated or may retroactively be started from a point in time a predetermined period of time earlier than the reception of the signal. At the timing when the dToF sensor 100 ends the irradiation with the irradiation light, the control section 220 ends the predetermined processing (step S107). For example, in the case where the signal is transmitted consecutively at step S104 described above, step S107 may be performed on condition that the reception of the signal end. Alternatively, in the case where the signal indicative of the end of the irradiation is transmitted at step S105 described above, step S107 may be performed on condition that this signal be received. Further alternatively, in the case where the signal is transmitted only at step S102 described above, step S107 may be performed on condition that the predetermined irradiation duration time elapse.

With the above-described steps S101 to S107 performed every time the dToF sensor 100 performs irradiation with the irradiation light, it is possible to continuously prevent the irradiation light emitted by the dToF sensor 100 from influencing the detection result of the EVS 200.

According to the above-described embodiment of the present invention, while the dToF sensor 100 is performing the irradiation with the irradiation light, the event signal generated in the EVS 200 is invalidated or the predetermined flag is set for the event signal. Therefore, it is possible to prevent the irradiation light from influencing the detection result of the EVS 200.

As the laser light emitted by the dToF sensor 100, for example, infrared pulsed laser is used. In this case, the configuration of the embodiment of the present invention as described above is effective in the case where the EVS 200 capable of detecting light in an infrared wavelength band is used in combination with the dToF sensor 100. For example, it is also possible to attach an infrared cut filter to the EVS 200, but this hinders observation of light in the infrared wavelength band even when the dToF sensor 100 is not performing the irradiation. Moreover, the infrared cut filter does not fully cut the infrared light. Hence, for example, in the case where it is desired to observe light in the infrared wavelength band when the dToF sensor 100 is not performing the irradiation, or in the case where it is desired to sufficiently remove the influence of the irradiation light, the configuration of the present embodiment can be advantageous.

It is to be noted that the irradiation light emitted by the dToF sensor 100 is not limited to infrared light and that light in another wavelength band may be emitted. Further, the sensor that irradiates the object with the irradiation light in the embodiment of the present invention is not limited to the dToF sensor and may be an iToF sensor or a sensor using another kind of irradiation light.

While embodiments of the present invention have been described in detail with reference to the accompanying drawings, the present invention is not limited to such examples. A person ordinarily skilled in the art to which the present invention pertains can obviously arrive at various variations or modifications within the scope of technical concepts recited in claims, and it is understood that also such variations or modifications reasonably belong to the technical scope of the present invention.

### [Reference Signs List]

10: Sensor system
100: dToF sensor
110: Light source section
120: Light receiving section
130: Control section
131: Memory
132: Communication interface
200: EVS
210: Sensor array
220: Control section
221: Memory
222: Communication interface
300: Host apparatus

## Claims

1. A sensor system comprising:
a first sensor that irradiates an object with irradiation light; and
a second sensor that is an event-based vision sensor capable of capturing an image of the object, wherein
the first sensor includes a first control section that transmits to the second sensor a signal indicative of timing at which irradiation with the irradiation light is to be performed.

2. The sensor system according to claim 1, wherein
the second sensor includes a second control section that invalidates an event signal generated in the event-based vision sensor during the irradiation with the irradiation light.

3. The sensor system according to claim 1, wherein
the second sensor includes a second control section that sets a predetermined flag for an event signal generated in the event-based vision sensor during the irradiation with the irradiation light.

4. The sensor system according to any one of claims 1 to 3, wherein
the first sensor is a direct time-of-flight sensor or an indirect time-of-flight sensor.

5. The sensor system according to any one of claims 1 to 4, wherein
the first control section transmits the signal concurrently with control for the irradiation with the irradiation light.

6. A sensing method comprising:
a step of, by a first sensor, irradiating an object with irradiation light; and
a step of, by the first sensor, transmitting a signal indicative of timing at which irradiation with the irradiation light is to be performed, to a second sensor that is an event-based vision sensor capable of capturing an image of the object.

## Amended claims

### Amended claims under Art. 19.1 PCT

1. (Amended) A sensor system comprising:
a first sensor that irradiates an object with irradiation light; and
a second sensor that is an event-based vision sensor capable of capturing an image of the object, wherein
the first sensor includes a first control section that transmits to the second sensor a signal indicative of timing at which irradiation with the irradiation light is to be performed, and
the second sensor includes a second control section that performs processing for preventing the irradiation light from influencing a detection result of the event-based vision sensor.

2. (Amended) The sensor system according to claim 1, wherein
the second control section invalidates an event signal generated in the event-based vision sensor during the irradiation with the irradiation light.

3. (Amended) The sensor system according to claim 1, wherein
the second control section sets a predetermined flag for an event signal generated in the event-based vision sensor during the irradiation with the irradiation light.

4. The sensor system according to any one of claims 1 to 3, wherein
the first sensor is a direct time-of-flight sensor or an indirect time-of-flight sensor.

5. The sensor system according to any one of claims 1 to 4, wherein
the first control section transmits the signal concurrently with control for the irradiation with the irradiation light.

6. (Amended) A sensing method comprising:
a step of, by a first sensor, irradiating an object with irradiation light
a step of, by the first sensor, transmitting a signal indicative of timing at which irradiation with the irradiation light is to be performed, to a second sensor that is an event-based vision sensor capable of capturing an image of the object; and
a step of, by the second sensor, performing processing for preventing the irradiation light from influencing a detection result of the event-based vision sensor.
